# EUROPEAN PATENT APPLICATION

(11) **EP 4 682 005 A1**
(43) Date of publication of application: **21.01.2026**
(21) Application number: 24777854.1
(22) Date of filing: 21.03.2024
(51) Int. Cl.: B60W 30/095, B60W 60/00

(54) **LANE SELECTION METHOD AND APPARATUS, AND VEHICLE**

(30) Priority: 31.03.2023 CN 202310377688
(71) Applicant: Shenzhen Yinwang Intelligent Technologies Co., Ltd., Shenzhen, Guangdong 518110 (CN)
(72) Inventor: FENG, Pengpeng, Shenzhen, Guangdong 518129 (CN); QIAN, Chaojie, Shenzhen, Guangdong 518129 (CN); ZENG, Xia, Shenzhen, Guangdong 518129 (CN); WANG, Xinyu, Shenzhen, Guangdong 518129 (CN); GAN, Zhigang, Shenzhen, Guangdong 518129 (CN)
(74) Representative: Körber, Martin Hans
(86) International application number: PCT/CN2024/082899
(87) International publication number: WO 2024/199065

(57) **Abstract**

Provided are a lane selection method and apparatus, and a vehicle. The method may be applied to the field of intelligent driving. The method includes: when a vehicle is at an intersection, obtaining information about an obstacle around the vehicle and road topology information; determining a plurality of lanes based on the road topology information, and determining a collision risk between the vehicle and the obstacle based on the information about the obstacle, where the plurality of lanes are lanes through which the vehicle exits the intersection; and selecting, based on the collision risk, a first lane from the plurality of lanes to exit the intersection. When passing through the intersection, the vehicle may select a lane based on the collision risk between the vehicle and the obstacle. This helps improve safety of the vehicle passing through the intersection, thereby improving driving experience of a user.

## Description

### TECHNICAL FIELD

Embodiments of this application relate to the field of intelligent driving, and more specifically, to a lane selection method and apparatus, and a vehicle.

### BACKGROUND

With intelligent development of vehicles, many vehicles have an assisted driving function or an automatic driving function, which can reduce driving pressure and improve safety and traffic efficiency.

Current intelligent driving scenarios include an intersection scenario. When the assisted driving function or the automatic driving function is enabled, the vehicle usually selects a lane based on traffic efficiency. In this case, although efficiency of the vehicle in passing through an intersection can be improved, safety of the vehicle passing through the intersection may be affected, thereby affecting driving experience of a user.

### SUMMARY

This application provides a lane selection method and apparatus, and a vehicle, to help improve safety of the vehicle traveling at an intersection, and also help improve driving experience of a user.

The vehicle in this application may be a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not specifically limited in embodiments of this application.

According to a first aspect, this application provides a lane selection method. The method includes: when a vehicle is at an intersection, obtaining information about a first obstacle around the vehicle and road topology information; determining a plurality of lanes based on the road topology information, and determining a collision risk between the vehicle and the first obstacle based on the information about the first obstacle, where the plurality of lanes are lanes through which the vehicle exits the intersection; and selecting, based on the collision risk, a first lane from the plurality of lanes to exit the intersection.

Based on the foregoing technical solution, when passing through the intersection, the vehicle may select a lane based on the collision risk between the vehicle and the obstacle. This helps improve safety of the vehicle passing through the intersection, thereby improving driving experience of a user.

In some possible implementations, the first obstacle is one or more obstacles. A type of the obstacle includes but is not limited to another vehicle, a pedestrian, a non-motor vehicle, or a static obstacle. For example, the static obstacle includes one or more of a cone, a water-filled barrier, and a railing.

With reference to the first aspect, in some implementations of the first aspect, the determining a collision risk between the vehicle and the first obstacle based on the information about the first obstacle includes: determining the collision risk based on a time to collision (TTC) between the vehicle and the first obstacle and/or a distance between the vehicle and the first obstacle.

Based on the foregoing technical solution, when passing through the intersection, the vehicle may determine the collision risk based on the TTC and/or the distance between the vehicle and the obstacle, to select, based on the collision risk, the first lane from the plurality of lanes to exit the intersection. This helps improve safety of the vehicle passing through the intersection, thereby improving driving experience of a user.

In some possible implementations, the distance between the vehicle and the first obstacle includes a lateral distance between the vehicle and the first obstacle.

With reference to the first aspect, in some implementations of the first aspect, the method further includes: determining a passing probability of the first obstacle based on at least one of the road topology information, a type of each of the plurality of lanes, information about a guide line in the intersection, and a motion trend of the first obstacle. The passing probability indicates a probability that the first obstacle selects a lane from the plurality of lanes for exiting the intersection. The selecting, based on the collision risk, a first lane from the plurality of lanes to exit the intersection includes: selecting, based on the collision risk and the passing probability, the first lane from the plurality of lanes to exit the intersection.

Based on the foregoing technical solution, when passing through the intersection, the vehicle may select, based on the collision risk between the vehicle and the obstacle and the probability that the obstacle selects the lane from the plurality of lanes for exiting the intersection, the first lane from the plurality of lanes to exit the intersection. This helps further improve safety of the vehicle passing through the intersection, thereby improving driving experience of a user.

With reference to the first aspect, in some implementations of the first aspect, the selecting, based on the collision risk, a first lane from the plurality of lanes to exit the intersection includes: selecting, based on the collision risk, an included angle between an orientation of the vehicle and an orientation of each lane, and an included angle between an orientation of the first obstacle and the orientation of each lane, the first lane from the plurality of lanes to exit the intersection.

Based on the foregoing technical solution, when passing through the intersection, the vehicle may obtain a risk of an obstacle relative to a lane with reference to the included angle between the orientation of the vehicle and the orientation of each lane and the included angle between the orientation of the obstacle and each lane, and select, with reference to the collision risk and the risk of the obstacle relative to a lane, the first lane from the plurality of lanes to exit the intersection. This helps further improve safety of the vehicle passing through the intersection, thereby improving driving experience of a user.

In some possible implementations of the first aspect, the selecting, based on the collision risk, a first lane from the plurality of lanes to exit the intersection includes: selecting, based on the collision risk, the passing probability, the included angle between the orientation of the vehicle and the orientation of each lane, and the included angle between the orientation of the first obstacle and the orientation of each lane, the first lane from the plurality of lanes to exit the intersection.

With reference to the first aspect, in some implementations of the first aspect, the method further includes: before the vehicle passes through the intersection, determining the first obstacle from a plurality of obstacles based on a TTC between the vehicle and each obstacle of the plurality of obstacles, and/or a distance between the vehicle and each obstacle; or when the vehicle passes through the intersection, determining the first obstacle from a plurality of obstacles based on at least one of a TTC between the vehicle and each obstacle of the plurality of obstacles, a distance between the vehicle and each obstacle, and a predicted trajectory of each obstacle.

Based on the foregoing technical solution, before passing through the intersection or in a process of passing through the intersection, the vehicle may select the first obstacle from the plurality of obstacles through filtering, so as to select, based on the collision risk between the vehicle and the first obstacle, the first lane from the plurality of lanes to exit the intersection. This helps reduce calculation overheads of the vehicle. In addition, comprehensively filtering obstacles helps improve security of the vehicle when exiting the intersection.

With reference to the first aspect, in some implementations of the first aspect, the method further includes: controlling a prompt apparatus to prompt information about the first lane.

Based on the foregoing technical solution, the vehicle may control the display apparatus to display the information about the first lane. In this way, a user in a cabin may determine, based on the information prompted by the prompt apparatus, a lane for the vehicle to exit the intersection, to help improve driving experience of the user.

In some possible implementations, the controlling a prompt apparatus to prompt information about the first lane includes: controlling a display apparatus to display the information about the first lane; or controlling a sound-making apparatus to prompt the information about the first lane. For example, the sound-making apparatus may include a sound box, a speaker, or the like.

With reference to the first aspect, in some implementations of the first aspect, the method further includes: determining an obstacle avoidance trajectory of the vehicle in the first lane based on the collision risk.

Based on the foregoing technical solution, with reference to the collision risk, the vehicle may plan the obstacle avoidance trajectory in the first lane, helping improve safety and flexibility during traveling at the intersection.

With reference to the first aspect, in some implementations of the first aspect, the information about the first obstacle includes one or more of a location, a speed, an acceleration, a speed direction, a heading direction, or a yaw rate of the first obstacle.

With reference to the first aspect, in some implementations of the first aspect, the road topology information includes at least one of lane division information of a road on which the vehicle is located, a type of each lane, and lane line information of each lane.

With reference to the first aspect, in some implementations of the first aspect, the method further includes: planning a traveling trajectory of the vehicle from a current location to the first lane.

According to a second aspect, a lane selection apparatus is provided. The apparatus includes: an obtaining unit, configured to: when a vehicle is at an intersection, obtain information about a first obstacle around the vehicle and road topology information; a determining unit, configured to determine a plurality of lanes based on the road topology information, and determine a collision risk between the vehicle and the first obstacle based on the information about the first obstacle, where the plurality of lanes are lanes through which the vehicle exits the intersection; and a lane selection unit, configured to select, based on the collision risk, a first lane from the plurality of lanes to exit the intersection.

With reference to the second aspect, in some implementations of the second aspect, the determining unit is configured to determine the collision risk based on a time to collision TTC between the vehicle and the first obstacle and/or a distance between the vehicle and the first obstacle.

With reference to the second aspect, in some implementations of the second aspect, the determining unit is further configured to determine a passing probability of the first obstacle based on at least one of the road topology information, a type of each of the plurality of lanes, information about a guide line in the intersection, and a motion trend of the first obstacle. The passing probability indicates a probability that the first obstacle selects a lane from the plurality of lanes for exiting the intersection. The lane selection unit is configured to select, based on the collision risk and the passing probability, the first lane from the plurality of lanes to exit the intersection.

With reference to the second aspect, in some implementations of the second aspect, the lane selection unit is configured to select, based on the collision risk, an included angle between an orientation of the vehicle and an orientation of each lane, and an included angle between an orientation of the first obstacle and the orientation of each lane, the first lane from the plurality of lanes to exit the intersection.

With reference to the second aspect, in some implementations of the second aspect, the determining unit is further configured to: before the vehicle passes through the intersection, determine the first obstacle from a plurality of obstacles based on a TTC between the vehicle and each obstacle of the plurality of obstacles, and/or a distance between the vehicle and each obstacle; or when the vehicle passes through the intersection, determine the first obstacle from a plurality of obstacles based on at least one of a TTC between the vehicle and each obstacle, a distance between the vehicle and each obstacle, and a predicted trajectory of each obstacle.

With reference to the second aspect, in some implementations of the second aspect, the apparatus further includes a control unit, configured to control a prompt apparatus to prompt information about the first lane.

With reference to the second aspect, in some implementations of the second aspect, the determining unit is further configured to determine an obstacle avoidance trajectory of the vehicle in the first lane based on the collision risk.

With reference to the second aspect, in some implementations of the second aspect, the information about the first obstacle includes one or more of a location, a speed, an acceleration, a speed direction, a heading direction, or a yaw rate of the first obstacle.

With reference to the second aspect, in some implementations of the second aspect, the road topology information includes at least one of lane division information of a road on which the vehicle is located, a type of each lane, and lane line information of each lane.

With reference to the second aspect, in some implementations of the second aspect, the apparatus further includes a route planning unit, configured to plan a traveling trajectory of the vehicle from a current location to the first lane.

According to a third aspect, this application provides a lane selection apparatus. The apparatus includes a processing unit and a storage unit. The storage unit is configured to store instructions. The processing unit executes the instructions stored in the storage unit, so that the apparatus performs any possible method in the first aspect.

According to a fourth aspect, this application provides a lane selection system. The lane selection system includes a sensor and a computing platform, and the computing platform includes any possible lane selection apparatus in the second aspect, or includes the lane selection apparatus in the third aspect.

With reference to the fourth aspect, in some implementations of the fourth aspect, the lane selection system further includes a prompt apparatus.

With reference to the fourth aspect, in some implementations of the fourth aspect, the computing platform is located in a cloud server.

According to a fifth aspect, this application provides a vehicle. The vehicle includes any possible lane selection apparatus in the second aspect, or includes the lane selection apparatus in the third aspect, or includes the lane selection system in the fourth aspect.

According to a sixth aspect, this application provides a server. The server includes any possible lane selection apparatus in the second aspect or the third aspect.

With reference to the sixth aspect, in some implementations of the sixth aspect, the server further includes a communication unit, and the communication unit is configured to send information about a first lane to a vehicle.

According to a seventh aspect, this application provides a computer program product. The computer program product includes computer program code. When the computer program code is run on a computer, the computer is enabled to perform any possible lane selection method in the first aspect.

It should be noted that all or a part of the computer program code may be stored in a first storage medium. The first storage medium may be packaged together with a processor, or may be packaged separately from a processor. This is not specifically limited in this embodiment of this application.

According to an eighth aspect, this application provides a computer-readable medium. The computer-readable medium stores program code. When the computer program code is run on a computer, the computer is enabled to perform any possible lane selection method in the first aspect.

According to a ninth aspect, this application provides a chip. The chip includes a circuit. The circuit is configured to perform any possible lane selection method in the first aspect.

### BRIEF DESCRIPTION OF DRAWINGS

FIG. 1 is a functional block diagram of a vehicle according to an embodiment of this application;
FIG. 2 is a block diagram of a system according to an embodiment of this application;
FIG. 3 is a schematic flowchart of a lane selection method according to an embodiment of this application;
FIG. 4 is a diagram of an intersection scenario according to an embodiment of this application;
FIG. 5 is a diagram of another intersection scenario according to an embodiment of this application;
FIG. 6 is a diagram of another intersection scenario according to an embodiment of this application;
FIG. 7 is a diagram of another intersection scenario according to an embodiment of this application;
FIG. 8 is a diagram of another intersection scenario according to an embodiment of this application;
FIG. 9 is a diagram of another intersection scenario according to an embodiment of this application;
FIG. 10 is a diagram of another intersection scenario according to an embodiment of this application;
FIG. 11 is a diagram of another intersection scenario according to an embodiment of this application;
FIG. 12 is a diagram of a human-machine interface according to an embodiment of this application; and
FIG. 13 is a block diagram of a lane selection apparatus according to an embodiment of this application.

### DESCRIPTION OF EMBODIMENTS

The following describes the technical solutions in embodiments of this application with reference to the accompanying drawings in embodiments of this application. In description of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one" means one or more. For example, "at least one of A and B ", similar to "A and/or B", describes an association relationship between associated objects and represents that three relationships may exist. For example, at least one of A and B may represent the following three cases: Only A exists, both A and B exist, and only B exists.

Prefix words "first", "second", and the like in embodiments of this application are merely intended to distinguish different described objects, and impose no limitation on locations, sequences, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation. In addition, in the descriptions of embodiments, unless otherwise specified, "a plurality of" means two or more.

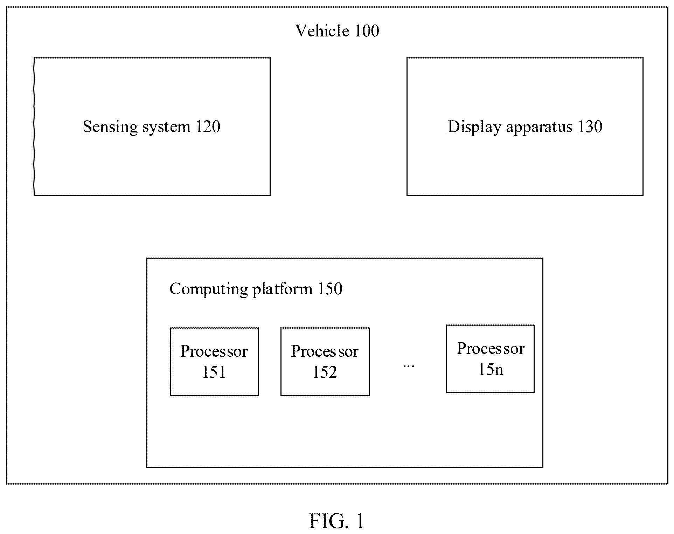

FIG. 1 is a functional block diagram of a vehicle 100 according to an embodiment of this application. The vehicle 100 may include a sensing system 120, a display apparatus 130, and a computing platform 150. The sensing system 120 may include one or more sensors that sense information about an ambient environment of the vehicle 100. For example, the sensing system 120 may include a positioning system. The positioning system may be a global positioning system (GPS), a BeiDou system, or another positioning system. The sensing system 120 may further include one or more of an inertial measurement unit (IMU), a lidar, a millimeter-wave radar, an ultrasonic radar, and a camera apparatus.

Some or all functions of the vehicle 100 may be controlled by the computing platform 150. The computing platform 150 may include one or more processors, for example, processors 151 to 15n (n is a positive integer). The processor is a circuit having a signal processing capability. In an implementation, the processor may be a circuit having an instruction reading and running capability, for example, a central processing unit (CPU), a microprocessor, a graphics processing unit (GPU) (which may be understood as a microprocessor), or a digital signal processor (DSP). In another implementation, the processor may implement a specific function according to a logical relationship of a hardware circuit. The logical relationship of the hardware circuit is fixed or reconfigurable. For example, the processor is a hardware circuit implemented by an application-specific integrated circuit (ASIC) or a programmable logic device (PLD), for example, a field programmable gate array (FPGA). In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as an ASIC, for example, a neural network processing unit (NPU), a tensor processing unit (TPU), or a deep learning processing unit (DPU). In addition, the computing platform 150 may further include a memory. The memory is configured to store instructions. Some or all of the processors 151 to 15n may invoke the instructions in the memory, to implement a corresponding function.

The display apparatus 130 in a cabin is mainly classified into two types: a vehicle-mounted display, and a projection display, for example, a head-up display (HUD) apparatus. The vehicle-mounted display is a physical display, and is an important part of an in-vehicle infotainment system. A plurality of displays may be disposed in the cabin, for example, a digital dashboard display, a central display, a display in front of a passenger in a front passenger seat (also referred to as a front-row passenger), a display in front of a rear-seat passenger on the left, and a display in front of a rear-seat passenger on the right. Even a window may be used as a display for display. The head-up display, also referred to as a head-up display system, is mainly configured to display driving information such as a speed and navigation on a display device (for example, a windshield) in front of a driver, to reduce gaze shift time of the driver, avoid a pupil change caused by gaze shift of the driver, and improve driving safety and comfort. For example, the HUD includes a combiner head-up display (combiner-HUD, C-HUD) system, a windshield head-up display (windshield-HUD, W-HUD) system, and an augmented reality head-up display (augmented reality HUD, AR-HUD) system. It should be understood that the HUD may also have another type of system with technology evolution. This is not limited in this application.

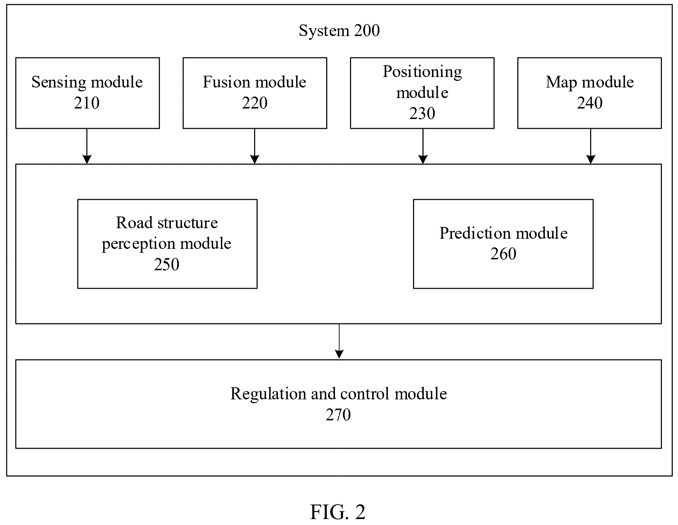

FIG. 2 is a block diagram of a system 200 according to an embodiment of this application. The system 200 may be located in the foregoing vehicle 100. The system 200 may include a sensing module 210, a fusion module 220, a positioning module 230, a map module 240, a road structure perception module 250, a prediction module 260, and a regulation and control module 270. The sensing module 210 is configured to process data collected by various vehicle-mounted sensors and identify an obstacle on a road. The fusion module 220 is configured to fuse the data collected by various sensors, to obtain information about an obstacle. For example, the information about the obstacle may include a type, a location, a speed, a heading angle, and the like of the obstacle. The positioning module 230 is configured to determine location information of a vehicle and a current motion status (for example, a heading angle, a speed, an acceleration, and an angular velocity) of the vehicle based on the data collected by the sensor. The map module 240 is configured to provide navigation information of the vehicle and distance information (for example, a distance between the vehicle and an intersection) of a road on which the vehicle is located. The road structure perception module 250 is configured to process a road attribute, and output a local road structure model, for example, road topology information. The prediction module 260 is configured to determine a future travel intention and a predicted trajectory of the obstacle based on the information about the obstacle, to predict a collision risk between the vehicle and the obstacle. The regulation and control module 270 is configured to determine, based on the road structure model determined by the road structure perception module 250 and the collision risk between the vehicle and the obstacle determined by the prediction module 260, a lane through which the vehicle exits the intersection. The regulation and control module 270 may further generate an expected trajectory and generate a corresponding control variable based on the lane through which the vehicle exits the intersection, and finally an actuator controls the vehicle to complete a driving task.

The sensing module 210, the fusion module 220, the positioning module 230, the map module 240, the road structure perception module 250, the prediction module 260, and the regulation and control module 270 in the system 200 may be located in the foregoing computing platform 150.

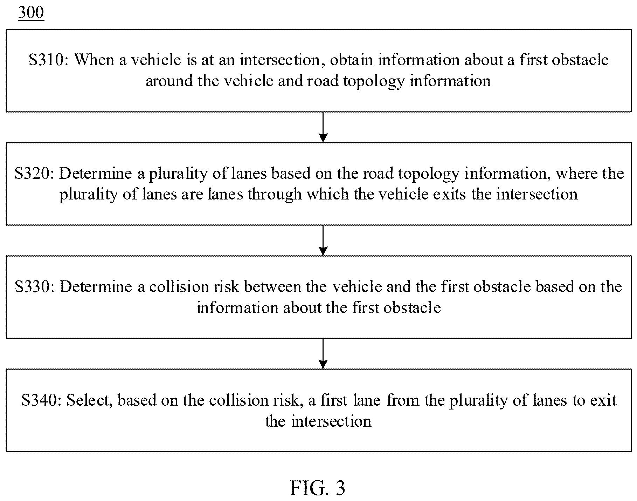

FIG. 3 is a schematic flowchart of a lane selection method 300 according to an embodiment of this application. The method 300 may be performed by the vehicle 100 shown in FIG. 1, or the method 300 may be performed by the computing platform 150, or the method 300 may be performed by a system including the computing platform 150 and a sensor, or the method 300 may be performed by a system-on-chip (SoC) on the computing platform 150, or the method 300 may be performed by a processor on the computing platform 150, or the method 300 may be performed by the system 200. The following uses an example in which an execution body is a vehicle for description. The method 300 includes the following steps.

S310: When the vehicle is at an intersection, obtain information about a first obstacle around the vehicle and road topology information.

In an embodiment, the vehicle may determine, based on the navigation information provided by a map module 240, that the vehicle is in an intersection scenario.

For example, when it is determined, based on the navigation information provided by the map module 240 and the road topology information provided by a road structure perception module 250, that a distance between the vehicle and the intersection is less than or equal to a first preset distance, it is determined that the vehicle is in the intersection scenario.

For another example, when determining, based on the navigation information provided by the map module 240, that a distance between the vehicle and the intersection is greater than or equal to a second preset distance, the vehicle may determine that the vehicle is switched from the intersection scenario to a non-intersection scenario.

In an embodiment, when the vehicle is in an intersection scenario, the vehicle may determine road topology information based on data collected by a sensor (for example, a camera) outside a cabin; or the vehicle may determine the road topology information based on the navigation information provided by the map module 240 and a road structure provided by the road structure perception module 250.

For example, the road topology information includes at least one of lane division information of a road on which the vehicle is located, a type of each lane, and lane line information of each lane. The lane division information includes a quantity of lanes existing when the vehicle enters the intersection. A type of each lane includes a left-turn lane, a left-turn and through lane, a through lane, a right-turn lane, a right-turn and through lane, a U-turn lane, or the like. Alternatively, a type of each lane includes information about whether a lane is a bus lane or an emergency lane.

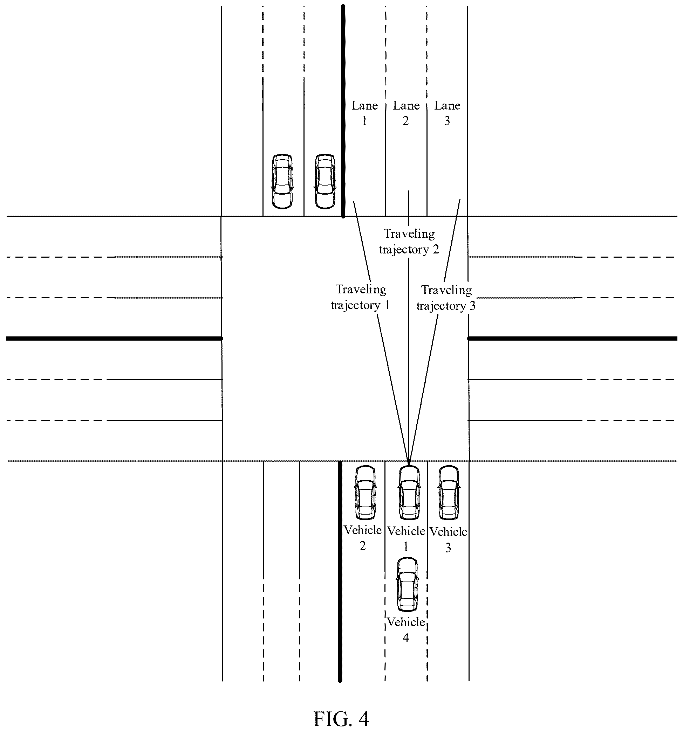

FIG. 4 is a diagram of an intersection scenario according to an embodiment of this application. When a vehicle 1 passes through an intersection, it may be determined, by using the map module 240 and the road structure perception module 250, that the current vehicle is in the intersection scenario with three unidirectional lanes and the vehicle is on a middle lane.

In an embodiment, the vehicle may determine information about an obstacle around the vehicle based on a sensor (for example, one or more of a camera, a lidar, a millimeter-wave radar, and an ultrasonic radar) outside a cabin. For example, the information about the obstacle includes one or more of a type (for example, all obstacles around the vehicle 1 are vehicles), a location, a speed, an acceleration, a speed direction, a heading direction, or a yaw rate of the obstacle.

S320: Determine a plurality of lanes based on the road topology information, where the plurality of lanes are lanes through which the vehicle exits the intersection.

For example, as shown in FIG. 4, the vehicle may determine, based on the road topology information, lanes that can be selected when the vehicle exits the intersection. For example, the lanes that can be selected include a lane 1, a lane 2, and a lane 3.

In FIG. 4, the intersection with obvious lane division is used as an example for description. This embodiment of this application is not limited thereto. For example, for an intersection without lane division, the vehicle may determine a lane width based on data collected by the sensor, so that lanes may be divided based on the lane width. The vehicle may determine, based on current location information, a lane on which the vehicle is located.

In an embodiment, when the plurality of lanes for exiting the intersection are determined, the vehicle may further plan a plurality of traveling trajectories for traveling from a current location to the lanes for exiting the intersection. As shown in FIG. 4, the vehicle may obtain a traveling trajectory 1, a traveling trajectory 2, and a traveling trajectory 3 through planning. The traveling trajectory 1 is a traveling trajectory of the vehicle used when the vehicle exits the intersection from the lane 1, the traveling trajectory 2 is a traveling trajectory of the vehicle used when the vehicle exits the intersection from the lane 2, and the traveling trajectory 3 is a traveling trajectory of the vehicle used when the vehicle exits the intersection from the lane 3.

S330: Determine a collision risk between the vehicle and the first obstacle based on the information about the first obstacle.

In an embodiment, before the determining a collision risk between the vehicle and the obstacle based on the information about the obstacle, the method 300 further includes: filtering obstacles around the vehicle. A process of filtering the obstacles around the vehicle may include filtering obstacles existing before the vehicle passes through the intersection and filtering obstacles existing when the vehicle is at the intersection.

In an embodiment, the obstacles existing before the vehicle passes through the intersection may be filtered based on TTCs and/or lateral distances between obstacles in a left lane and a right lane of the vehicle and the vehicle.

In an embodiment, if a lateral distance between an obstacle and the vehicle is less than or equal to a preset distance, the obstacle may be determined as an obstacle around the vehicle.

For example, the preset distance may be 1 meter.

In an embodiment, if a TTC between an obstacle and the vehicle is less than or equal to preset duration, the obstacle may be determined as an obstacle around the vehicle. For example, the TTC may be 2 seconds.

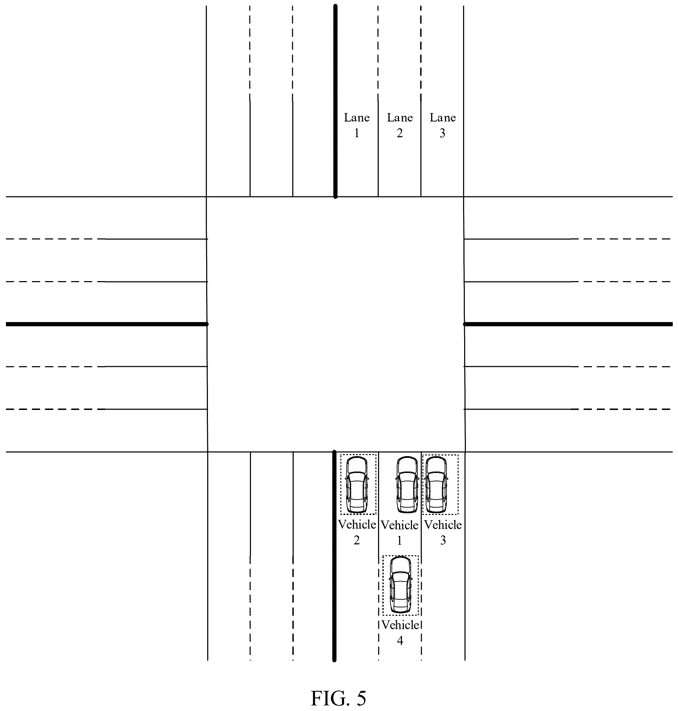

For example, FIG. 5 is another diagram of an intersection scenario according to an embodiment of this application. As shown in FIG. 5, before a vehicle 1 passes through an intersection, a lateral distance between the vehicle 1 and a vehicle 3 is 0.5 m, and a lateral distance between the vehicle 1 and the vehicle 2 is 1.5 m. It may be determined that the vehicle 3 is an obstacle around the vehicle 1 and a vehicle 2 is not an obstacle around the vehicle 1.

In an embodiment, the obstacles existing when the vehicle is at the intersection may be filtered based on one or more of predicted trajectories of the obstacles and the plurality of traveling trajectories planned in step S320, TTCs between obstacles in a left lane and a right lane of the lane on which the vehicle is located and the vehicle, and lateral distances between the obstacles in the left lane and the right lane of the lane on which the vehicle is located and the vehicle.

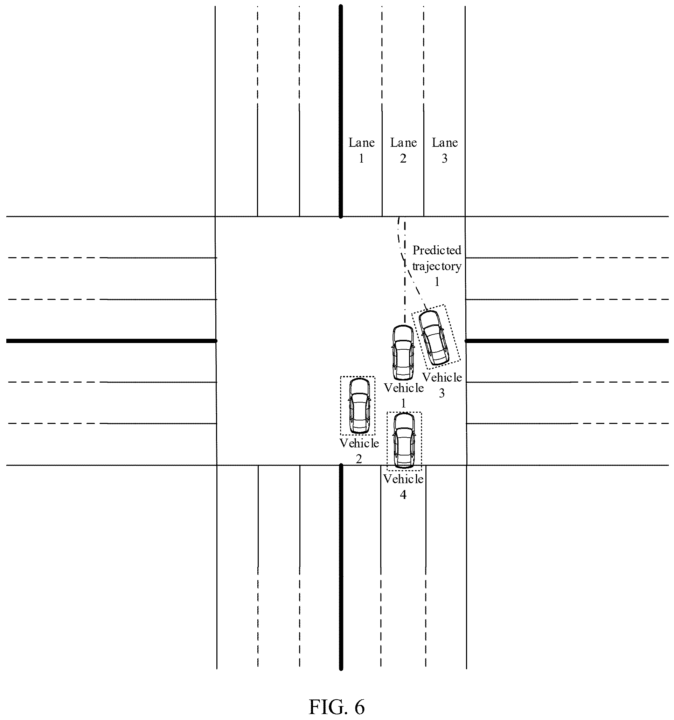

FIG. 6 is another diagram of an intersection scenario according to an embodiment of this application. If a traveling trajectory 2 of a vehicle 1 and a predicted trajectory 1 of a vehicle 3 may intersect at a future moment, it may be determined that the vehicle 3 is an obstacle around the vehicle 1.

That the traveling trajectory 2 intersects the predicted trajectory 1 may be understood as that a distance between the traveling trajectory 2 and the predicted trajectory 1 of the vehicle 3 is less than or equal to a preset distance; or may be understood as that at a future moment, a collision polygon of the vehicle 1 when traveling along the traveling trajectory 2 partially or completely overlaps a collision polygon of the vehicle 3 when traveling along the predicted trajectory 1.

The collision polygon may be understood as a bounding box. For example, the bounding box may be a rectangular box or a cube; or the collision polygon may be understood as a polygon contour.

In an embodiment, the determining a collision risk between the vehicle and the obstacle based on the information about the obstacle includes: determining the collision risk between the vehicle and the obstacle based on a time to collision and/or a lateral distance between the vehicle and the obstacle. If the time to collision between the vehicle and the obstacle is shorter, and/or the lateral distance is shorter, the collision risk between the vehicle and the obstacle is higher.

For example, the collision risk may be represented by using a collision probability. For example, Table 1 shows a correspondence between the lateral distance and the collision risk.

**Table 1**

| Lateral distance | Collision risk |
|---|---|
| (0.8 m, 1 m] | 20% |
| (0.6 m, 0.8 m] | 40% |
| (0.4 m, 0.6 m] | 60% |
| (0.2 m, 0.4 m] | 80% |
| ... | ... |

For example, Table 2 shows a correspondence between the TTC and the collision risk.

**Table 2**

| TTC | Collision risk |
|---|---|
| (2s, 2.5s] | 20% |
| (1.5s, 2s] | 40% |
| (1s, 1.5s] | 60% |
| (0.5s, 1s] | 80% |
| ... | ... |

In an embodiment, when the collision risk between the vehicle and the obstacle meets a preset condition, the vehicle may select a lane away from the obstacle to exit the intersection. For example, the preset condition is that the collision risk is greater than 60%.

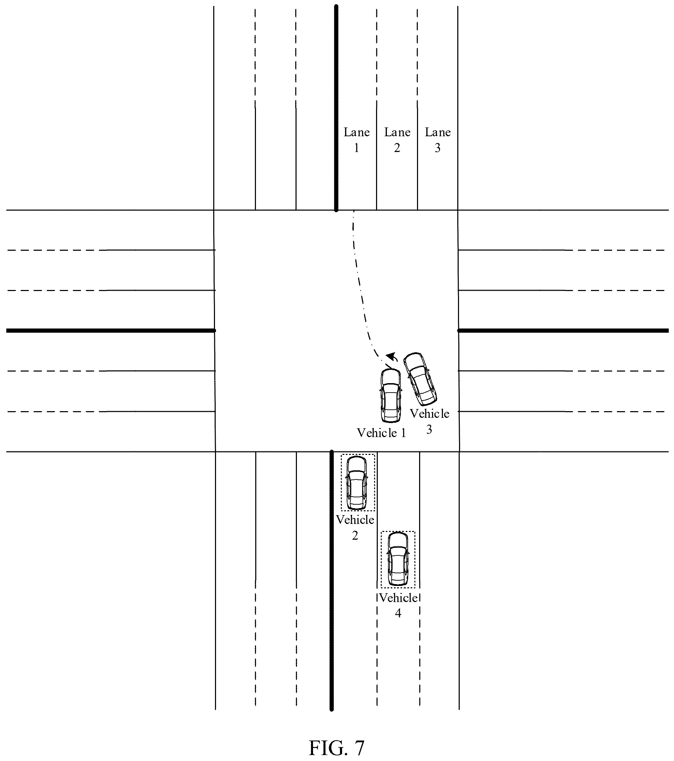

For example, FIG. 7 is another diagram of an intersection scenario according to an embodiment of this application. As shown in FIG. 7, when it is determined that a lateral distance between a vehicle 1 and a vehicle 3 is 0.4 m in a process of passing through an intersection, it may be determined that a collision risk between the vehicle 1 and the vehicle 3 is 60%. When the lateral distance between the vehicle 1 and the vehicle 3 is further reduced, the vehicle 1 may determine that a collision risk between the vehicle 1 and the vehicle 3 is greater than 60%. In this case, the vehicle 1 may turn toward a lane that is away from the vehicle 3. For example, the vehicle 1 may turn left and select a lane 1 to exit the intersection.

For example, as shown in FIG. 7, when a TTC between a vehicle 1 and a vehicle 3 is 1s in a process of passing through an intersection, the vehicle 1 may determine that a collision risk between the vehicle 3 and the vehicle 1 is 60%. When the TTC between the vehicle 1 and the vehicle 3 is further reduced, the vehicle 1 may determine that a collision risk between the vehicle 1 and the vehicle 3 is greater than 60%. In this case, the vehicle 1 may turn toward a lane that is away from the vehicle 3. For example, the vehicle 1 may turn left and select a lane 1 to exit the intersection.

In the foregoing content, the collision risk is determined based on the lateral distance or the TTC between the vehicle and the obstacle, or the collision risk may be determined with reference to the lateral distance and the TTC. For example, when the lateral distance between the vehicle 1 and the vehicle 3 is less than 0.4 and the TTC is less than or equal to 1s, it may be determined that a collision risk between the vehicle 1 and the vehicle 3 is greater than 60%.

Optionally, the method 300 further includes: determining an obstacle avoidance trajectory of the vehicle in a first lane based on the collision risk.

For example, when the collision risk between the vehicle 1 and the vehicle 3 meets the preset condition, the vehicle 1 does not select the lane 1 to exit the intersection, but plans an obstacle avoidance trajectory in a lane 2. For example, when determining that a head of the vehicle 3 turns left, the vehicle 1 may first decelerate to avoid the vehicle 3. When the vehicle 3 travels ahead of the vehicle 1, the vehicle 1 may follow the vehicle 3 to exit the intersection from the lane 2.

There is no actual sequence between S320 and S330.

S340: Select, based on the collision risk, a first lane from the plurality of lanes to exit the intersection.

For example, as shown in FIG. 5, before passing through the intersection, the vehicle 1 may determine that the lateral distance between the vehicle 1 and the vehicle 3 is less than or equal to the preset distance, and predicate that the vehicle 3 selects a lane 3 to exit the intersection. In this case, the vehicle 1 may select a lane 2 to exit the intersection, or the vehicle 1 may select a traveling trajectory 2 from a plurality of traveling trajectories to exit the intersection.

In a process of passing through the intersection, as shown in FIG. 6, the vehicle 1 determines, based on a speed and a heading angle of the vehicle 3, that the predicted trajectory of the vehicle 3 changes (for example, the vehicle 1 predicts that the vehicle 3 exits the intersection through a lane 2), and a time to collision and a lateral distance between the vehicle 1 and the vehicle 3 are reduced. In this case, the vehicle 1 may switch to a lane 1 to exit the intersection, and replan a traveling trajectory from a current location to the lane 1.

In an embodiment, the selecting, based on the collision risk of the vehicle and the obstacle, a first lane from the plurality of lanes for exiting the intersection includes: selecting, based on the collision risk of the vehicle and the obstacle and a passing probability of the obstacle, the first lane from the plurality of lanes for exiting the intersection. The passing probability indicates a probability that the first obstacle selects a lane from the plurality of lanes for exiting the intersection.

For example, the method 300 further includes: determining the passing probability of the first obstacle based on at least one of the road topology information, a type of each of the plurality of lanes, information about a guide line in the intersection, and a motion trend of the first obstacle.

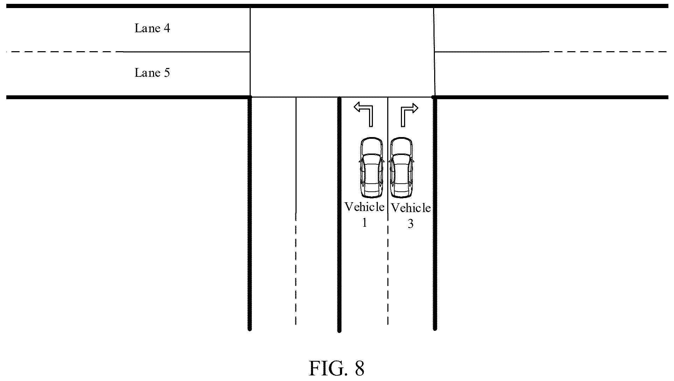

For example, FIG. 8 is another diagram of an intersection scenario according to an embodiment of this application. As shown in FIG. 8, for example, the intersection is a T-intersection. Before passing through the intersection, a lateral distance between a vehicle 1 and a vehicle 3 is 0.3 m. In this case, it may be determined that a collision risk between the vehicle 1 and the vehicle 3 is greater than 60%. It may be determined, based on road topology information, that the vehicle 1 is located on a left-turn lane and the vehicle 3 is located on a right-turn lane. In this case, the vehicle 1 may determine that a passing probability of the vehicle 3 is 0, or the vehicle 1 may determine that the vehicle 3 does not turn left to exit the intersection, but selects to turn right to exit the intersection. The vehicle 1 ignores the collision risk of the vehicle 3 to the vehicle 1, and randomly selects a lane from a lane 4 and a lane 5 to exit the intersection. Alternatively, when determining that the vehicle 3 turns right at the intersection, the vehicle 1 may ignore the collision risk of the vehicle 3 to the vehicle 1, and randomly select a lane from a lane 4 and a lane 5 to exit the intersection.

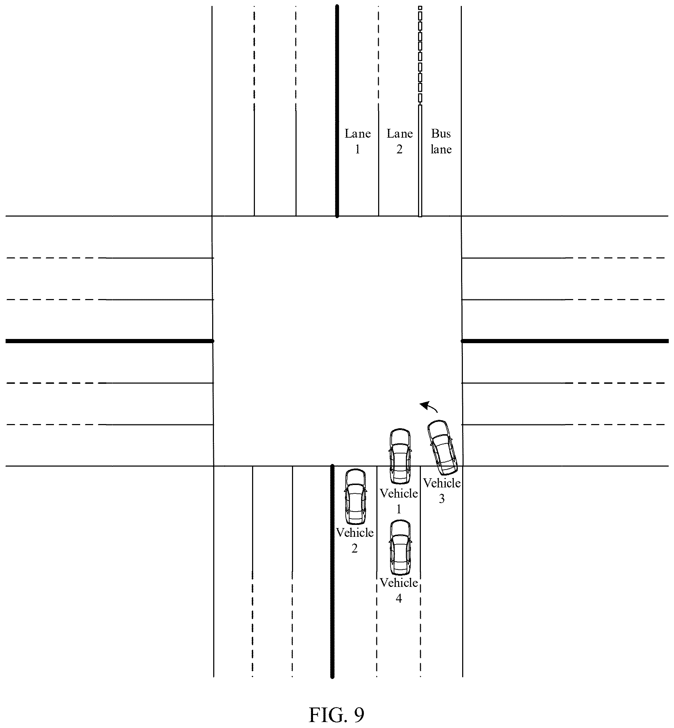

For example, FIG. 9 is another diagram of an intersection scenario according to an embodiment of this application. As shown in FIG. 9, when a vehicle 1 and a vehicle 3 exit an intersection, a rightmost lane is a bus lane. The vehicle 1 may determine that the vehicle 3 may select a lane 1 or a lane 2 to exit the intersection when passing through the intersection. Because the vehicle 3 turns left across a lane when exiting the intersection through the lane 1, it may be determined that a probability of the vehicle 3 exiting the intersection through the lane 1 is 10%, and a probability of the vehicle 3 exiting the intersection through the lane 2 is 90%. In this case, the vehicle 1 may select, based on a collision risk between the vehicle 1 and the vehicle 3 and a passing probability of the vehicle 3, the lane 1 or the lane 2 to exit the intersection. For example, when the vehicle 3 passes through the intersection, if a collision risk between the vehicle 3 and the vehicle 1 meets a preset condition, and the vehicle 3 has an intention of turning left toward the lane 2, the vehicle 1 may first decelerate so that the vehicle 3 travels ahead the vehicle 1, and finally the vehicle 1 may select the lane 2 to exit the intersection. For another example, when the vehicle 1 and the vehicle 3 pass through the intersection, a traffic indicator of the intersection is red. When the traffic indicator changes from red to green, the vehicle 1 may select the lane 1 or the lane 2 to accelerate to pass through the intersection.

In FIG. 9, an example in which a type of the rightmost lane is a bus lane is used for description. This embodiment of this application is not limited thereto. For example, the type of the rightmost lane may be a lane on which an accident occurs, or the type of the rightmost lane may be a lane with heavy congestion.

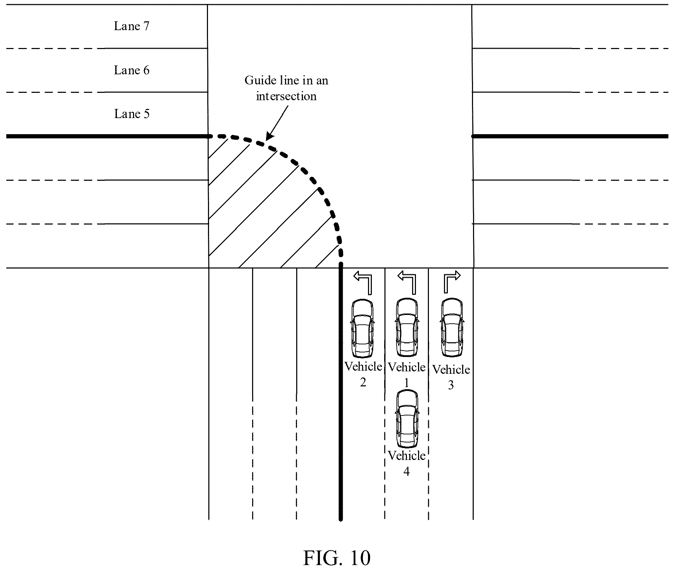

For example, FIG. 10 is another diagram of an intersection scenario according to an embodiment of this application. When turning left, a vehicle 1 may predict, with reference to information about a guide line in an intersection, that a vehicle 2 does not pass through a shadow area when turning left at the intersection. The vehicle 1 may determine, based on the information about the guide line in the intersection, that a probability of the vehicle 2 passing through the intersection through a lane 5 is 50%, a probability of the vehicle 2 passing through the intersection through a lane 6 is 40%, and a probability of the vehicle 2 passing through the intersection through a lane 7 is 10%. The vehicle 1 may select, based on a collision risk between the vehicle 1 and the vehicle 2 and a passing probability of the vehicle 2, a lane from the lane 5 to the lane 7 to exit the intersection. For example, in a process of passing through the intersection, if the vehicle 1 determines that a collision risk between the vehicle 1 and the vehicle 2 is less than 60%, and determines, based on the guide line of the intersection and a traveling parameter (for example, a location, a speed, and a heading angle) of the vehicle 2, that the probability of the vehicle 2 choosing to exit the intersection through the lane 5 is increased to 90%, the vehicle 1 may select the lane 6 to exit the intersection. For another example, in a process of passing through the intersection, if the vehicle 1 determines that a collision risk between the vehicle 1 and the vehicle 2 is less than 60%, and determines, based on the guide line of the intersection and a traveling parameter of the vehicle 2, that the probability of the vehicle 2 choosing to exit the intersection through the lane 6 is increased to 90%, the vehicle 1 may choose to decelerate to avoid the vehicle 2, and then select any lane from the lane 5 to the lane 7 to exit the intersection.

The information about the guide line of the intersection may be further combined with a type of a lane. For example, the lane 7 may be a bus lane. The vehicle 1 may determine, based on the information about the guide line in the intersection and the type of the lane, that a probability of the vehicle 2 passing through the intersection through the lane 5 is 60%, and a probability of the vehicle 2 passing through the intersection through the lane 6 is 40%.

In an embodiment, before passing through the intersection, the vehicle may determine the passing probability of the obstacle based on at least one of road topology information, a type of a lane, and information about whether a guide line exists in the intersection.

In this embodiment of this application, the passing probability of the obstacle may be a probability that the obstacle exits the intersection from an intersection exit point in the future. The TTC and the lateral distance may be a risk of short-term interaction between the vehicle and the obstacle, and the passing probability may be a prediction of an intention of the vehicle on the obstacle in a long period of time in the future.

In an embodiment, in a process of passing through the intersection, the vehicle may determine the passing probability of the obstacle based on a motion trend of the obstacle.

For example, the vehicle 1 may determine, based on a motion trend of another surrounding obstacle, a probability of the another obstacle exiting the intersection. For example, as shown in FIG. 5, before passing through the intersection, the vehicle 1 may determine that a probability of the vehicle 3 selecting the lane 1 to exit the intersection is 10%, a probability of the vehicle 3 selecting the vehicle 2 to exit the intersection is 20%, and a probability of the vehicle 3 selecting the lane 3 to exit the intersection is 70%. In a process of passing through the intersection, when determining that the vehicle 3 turns left, the vehicle 1 may determine, based on a head orientation and a speed of the vehicle 3, that a predicted trajectory of the vehicle 3 passing through the intersection through the lane 1 or the lane 2 is relatively smooth, and a predicted trajectory of the vehicle 3 passing through the intersection through the lane 3 corresponds to a relatively large curvature. In this case, the vehicle 1 may determine that a probability of the vehicle 3 selecting the lane 1 to exit the intersection is 30%, a probability of the vehicle 3 selecting the lane 2 to exit the intersection is 60%, and a probability of the vehicle 3 selecting the lane 3 to exit the intersection is 10%. The vehicle 1 may select, with reference to a collision risk between the vehicle 1 and the vehicle 3 and a passing probability of the vehicle 3, a lane for exiting the intersection.

In an embodiment, the selecting, based on the collision risk, a first lane from the plurality of lanes to exit the intersection includes: selecting, based on the collision risk, an included angle between an orientation of the vehicle and an orientation of each lane, and an included angle between an orientation of the first obstacle and the orientation of each lane, the first lane from the plurality of lanes to exit the intersection.

For example, the included angle between the vehicle and each lane and the included angle between the obstacle and each lane may be used to determine a risk caused by the obstacle to the vehicle when the obstacle and the vehicle select a same lane. The risk caused by the obstacle to the vehicle may also be understood as a risk in a long period of time in the future.

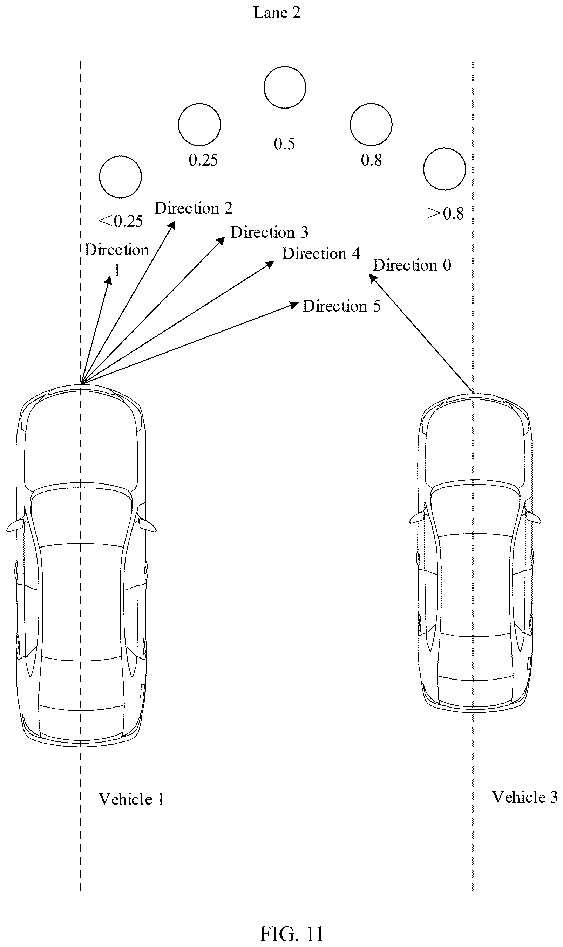

FIG. 11 shows a risk caused by a vehicle 3 to a vehicle 1 when both a vehicle 1 and a vehicle 3 select a lane 2 to exit an intersection according to an embodiment of this application. For example, the vehicle 3 may travel along a direction 0, and in this case, a risk caused by the vehicle 3 to the vehicle 1 when the vehicle 1 travels along a direction 1 is less than 0.25, a risk caused by the vehicle 3 to the vehicle 1 when the vehicle 1 travels along a direction 2 is 0.25, a risk caused by the vehicle 3 to the vehicle 1 when the vehicle 1 travels along a direction 3 is 0.5, a risk caused by the vehicle 3 to the vehicle 1 when the vehicle 1 travels along a direction 4 is 0.8, and a risk caused by the vehicle 3 to the vehicle 1 is greater than 0.8 when the vehicle 1 travels along a direction 5. The vehicle 1 may select, based on the collision risk and a risk caused by the vehicle 3 to the vehicle when a same lane is selected, a lane from a plurality of lanes to exit the intersection. For example, in a process of exiting the intersection, the vehicle 1 may predicate that there is no collision risk with the vehicle 3 within two seconds after crossing a stop line. However, when both the vehicle 1 and the vehicle 3 select the lane 2 two seconds after crossing the stop line, a risk caused by the vehicle 3 to the vehicle 1 is greater than 0.5. In this case, the vehicle 1 may select a lane 1 to exit the intersection.

Optionally, the method 300 further includes: controlling a prompt apparatus to prompt the information about the first lane.

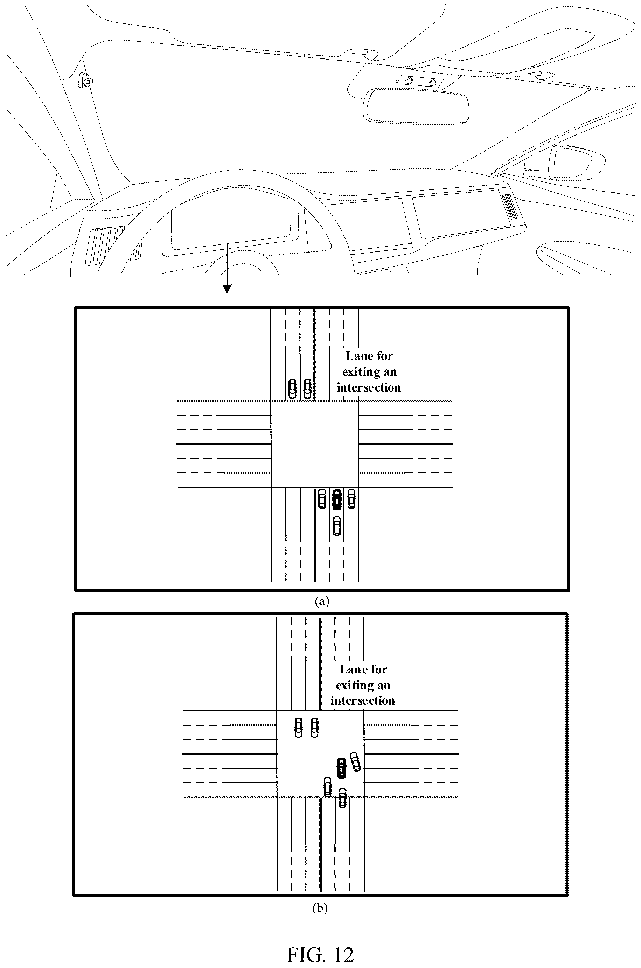

For example, FIG. 12 is a diagram of a human-machine interface (HMI) according to an embodiment of this application. As shown in (a) in FIG. 12, before passing through an intersection, a vehicle 1 may select a lane 2 to exit the intersection (in this case, the vehicle 1 may choose not to change the lane), and control a display to display information about the lane for exiting the intersection. As shown in (b) in FIG. 12, in a process of passing through the intersection, the vehicle 1 may update, based on a collision risk, the lane for exiting the intersection in real time. For example, when determining that a head of the vehicle 3 turns left and the collision risk meets a preset condition, the vehicle 1 may switch to selecting a lane 1 to exit the intersection, and display updated information of the lane for exiting the intersection on the display.

The foregoing is described by using an example in which the prompt apparatus is a display of a vehicle. This embodiment of this application is not limited thereto. For example, a user may be notified of the lane for exiting the intersection through an HUD or an in-vehicle speaker.

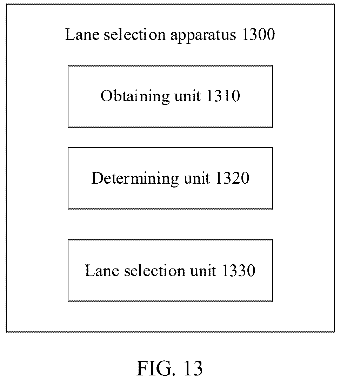

FIG. 13 is a block diagram of a lane selection apparatus 1300 according to an embodiment of this application. As shown in FIG. 13, the apparatus 1300 includes: an obtaining unit 1310, configured to: when a vehicle is at an intersection, obtain information about a first obstacle around the vehicle and road topology information; a determining unit 1320, configured to determine a plurality of lanes based on the road topology information, and determine a collision risk between the vehicle and the first obstacle based on the information about the first obstacle, where the plurality of lanes are lanes through which the vehicle exits the intersection; and a lane selection unit 1330, configured to select, based on the collision risk, a first lane from the plurality of lanes to exit the intersection.

Optionally, the determining unit 1320 is configured to determine the collision risk based on a time to collision TTC between the vehicle and the first obstacle and/or a distance between the vehicle and the first obstacle.

Optionally, the determining unit 1320 is further configured to determine a passing probability of the first obstacle based on at least one of the road topology information, a type of a lane that the first obstacle enters after exiting the intersection, information about a guide line in the intersection, and a motion trend of the first obstacle. The passing probability indicates a probability that the first obstacle selects a lane from the plurality of lanes for exiting the intersection. The lane selection unit 1330 is configured to select, based on the collision risk and the passing probability, the first lane from the plurality of lanes to exit the intersection.

Optionally, the lane selection unit 1330 is configured to select, based on the collision risk, an included angle between an orientation of the vehicle and an orientation of each lane, and an included angle between an orientation of the first obstacle and the orientation of each lane, the first lane from the plurality of lanes to exit the intersection.

Optionally, the determining unit 1320 is further configured to: before the vehicle passes through the intersection, determine the first obstacle from a plurality of obstacles based on a TTC between the vehicle and each obstacle of the plurality of obstacles, and/or a distance between the vehicle and each obstacle; or when the vehicle passes through the intersection, determine the first obstacle from a plurality of obstacles based on at least one of a TTC between the vehicle and each obstacle, a distance between the vehicle and each obstacle, and a predicted trajectory of each obstacle.

Optionally, the apparatus 1300 further includes a control unit, configured to control a prompt apparatus to prompt information about the first lane.

Optionally, the determining unit 1320 is further configured to determine an obstacle avoidance trajectory of the vehicle in the first lane based on the collision risk.

Optionally, the information about the first obstacle includes one or more of a location, a speed, an acceleration, a speed direction, a heading direction, or a yaw rate of the first obstacle.

Optionally, the road topology information includes at least one of lane division information of a road on which the vehicle is located, a type of each lane, and lane line information of each lane.

Optionally, the apparatus 1300 further includes a route planning unit, configured to plan a traveling trajectory of the vehicle from a current location to the first lane.

For example, the obtaining unit 1310 may be the computing platform in FIG. 1, or a processing circuit, a processor, or a controller on the computing platform. For example, the obtaining unit 1310 is the processor 151 on the computing platform. The processor 151 may obtain the information about the first obstacle around the vehicle and the road topology information.

For another example, the determining unit 1320 may be the computing platform in FIG. 1, or a processing circuit, a processor, or a controller on the computing platform. For example, the determining unit 1320 is the processor 152 on the computing platform. The processor 152 may determine the plurality of lanes based on the road topology information obtained by the processor 151, and determine the collision risk between the vehicle and the first obstacle based on the information about the first obstacle obtained by the processor 151.

For another example, the lane selection unit 1330 may be the computing platform in FIG. 1, or a processing circuit, a processor, or a controller on the computing platform. For example, the lane selection unit 1330 is the processor 153 on the computing platform. The processor 153 may select, based on the collision risk determined by the processor 152, the first lane from the plurality of lanes to exit the intersection.

The functions implemented by the obtaining unit 1310, the determining unit 1320, and the lane selection unit 1330 may be implemented by different processors, or may be implemented by a same processor, or some of the functions may be implemented by a same processor. This is not limited in this embodiment of this application.

It should be understood that division into units of the foregoing apparatus is merely logical function division, and during actual implementation, all or some of the units may be integrated into a physical entity, or the units may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. For example, the processor is a general-purpose processor, such as a CPU or a microprocessor, and the memory is a memory in the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between elements in the circuit. For another example, in another implementation, the hardware circuit may be implemented by using a PLD, for example, an FPGA, and the FPGA may include a large quantity of logic gate circuits, and a connection relationship between the logic gate circuits is configured by using a configuration file, to implement the functions of some or all of the foregoing units. All the units of the foregoing apparatus may be implemented in the form of software invoked by the processor, or may be implemented in the form of the hardware circuit, or some of the units are implemented in the form of software invoked by the processor, and remaining units are implemented in the form of the hardware circuit.

Each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, these units are integrated and implemented in a form of a SoC. The SoC may include at least one processor, configured to implement any one of the foregoing methods or implement functions of the units of the apparatus. Types of the at least one processor may be different, for example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

Optionally, if the apparatus is located in a vehicle, the processing unit may be the processors 151 to 15n shown in FIG. 1.

An embodiment of this application further provides a lane selection system. The system includes one or more sensors and a computing platform. The computing platform includes the foregoing apparatus 1300.

For example, the one or more sensors may be located in a vehicle, and the computing platform may be located in a cloud server or the vehicle.

An embodiment of this application further provides a server. The server may include the foregoing apparatus 1300. For example, the server may obtain information about an obstacle and road topology information that are sent by the vehicle. The server may determine a plurality of lanes based on the road topology information, and determine a collision risk between the vehicle and the obstacle based on the information about the obstacle, so as to determine, based on the collision risk, that the vehicle selects a first lane from the plurality of lanes to exit an intersection. The server may send information about the first lane to the vehicle, so that the vehicle may select, based on the information sent by the server, the first lane to exit the intersection. Optionally, the server may further plan a planned route for traveling from a current location of the vehicle to the first lane to exit the intersection, so that the vehicle can control traveling of the vehicle based on the planned route.

An embodiment of this application further provides a vehicle. The vehicle may include the foregoing apparatus 1300 or the foregoing system.

An embodiment of this application further provides a computer program product. The computer program product includes computer program code, and when the computer program code is run on a computer, the computer is enabled to perform the method.

An embodiment of this application further provides a computer-readable medium. The computer-readable medium stores program code, and when the computer program code is run on a computer, the computer is enabled to perform the method.

In an implementation process, steps in the foregoing methods can be implemented by using a hardware integrated logic circuit in the processor, or by using instructions in a form of software. The method disclosed with reference to embodiments of this application may be directly performed by a hardware processor, or may be performed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein.

It should be understood that in this embodiment of this application, the memory may include a read-only memory and a random access memory, and provide instructions and data to the processor.

It should be further understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM), a random access memory (RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A lane selection method, comprising:
when a vehicle is at an intersection, obtaining information about a first obstacle around the vehicle and road topology information;
determining a plurality of lanes based on the road topology information, and determining a collision risk between the vehicle and the first obstacle based on the information about the first obstacle, wherein the plurality of lanes are lanes through which the vehicle exits the intersection; and
selecting, based on the collision risk, a first lane from the plurality of lanes to exit the intersection.

2. The method according to claim 1, wherein the determining a collision risk between the vehicle and the first obstacle based on the information about the first obstacle comprises:
determining the collision risk based on a time to collision (TTC) between the vehicle and the first obstacle and/or a distance between the vehicle and the first obstacle.

3. The method according to claim 1 or 2, wherein the method further comprises:
determining a passing probability of the first obstacle based on at least one of the road topology information, a type of a lane that the first obstacle enters after exiting the intersection, information about a guide line in the intersection, and a motion trend of the first obstacle, wherein the passing probability indicates a probability that the first obstacle selects a lane from the plurality of lanes for exiting the intersection; and
the selecting, based on the collision risk, a first lane from the plurality of lanes to exit the intersection comprises:
selecting, based on the collision risk and the passing probability, the first lane from the plurality of lanes to exit the intersection.

4. The method according to any one of claims 1 to 3, wherein the selecting, based on the collision risk, a first lane from the plurality of lanes to exit the intersection comprises:
selecting, based on the collision risk, an included angle between an orientation of the vehicle and an orientation of each lane of the plurality of lanes, and an included angle between an orientation of the first obstacle and the orientation of each lane, the first lane from the plurality of lanes to exit the intersection.

5. The method according to any one of claims 1 to 4, wherein the method further comprises:
before the vehicle passes through the intersection, determining the first obstacle from a plurality of obstacles based on a TTC between the vehicle and each obstacle of the plurality of obstacles, and/or a distance between the vehicle and each obstacle; or
when the vehicle passes through the intersection, determining the first obstacle from a plurality of obstacles based on at least one of a TTC between the vehicle and each obstacle of the plurality of obstacles, a distance between the vehicle and each obstacle, and a predicted trajectory of each obstacle.

6. The method according to any one of claims 1 to 5, wherein the method further comprises:
controlling a prompt apparatus to prompt information about the first lane.

7. The method according to any one of claims 1 to 6, wherein the method further comprises:
determining an obstacle avoidance trajectory of the vehicle in the first lane based on the collision risk.

8. The method according to any one of claims 1 to 7, wherein the information about the first obstacle comprises one or more of a location, a speed, an acceleration, a speed direction, a heading direction, or a yaw rate of the first obstacle.

9. The method according to any one of claims 1 to 8, wherein the road topology information comprises at least one of lane division information of a road on which the vehicle is located, a type of each lane, and lane line information of each lane.

10. The method according to any one of claims 1 to 9, wherein the method further comprises:
planning a traveling trajectory of the vehicle from a current location to the first lane.

11. A lane selection apparatus, comprising:
an obtaining unit, configured to: when a vehicle is at an intersection, obtain information about a first obstacle around the vehicle and road topology information;
a determining unit, configured to determine a plurality of lanes based on the road topology information, and determine a collision risk between the vehicle and the first obstacle based on the information about the first obstacle, wherein the plurality of lanes are lanes through which the vehicle exits the intersection; and
a lane selection unit, configured to select, based on the collision risk, a first lane from the plurality of lanes to exit the intersection.

12. The apparatus according to claim 11, wherein
the determining unit is configured to determine the collision risk based on a time to collision TTC between the vehicle and the first obstacle and/or a distance between the vehicle and the first obstacle.

13. The apparatus according to claim 11 or 12, wherein
the determining unit is further configured to determine a passing probability of the first obstacle based on at least one of the road topology information, a type of a lane that the first obstacle enters after exiting the intersection, information about a guide line in the intersection, and a motion trend of the first obstacle, wherein the passing probability indicates a probability that the first obstacle selects a lane from the plurality of lanes for exiting the intersection; and
the lane selection unit is configured to select, based on the collision risk and the passing probability, the first lane from the plurality of lanes to exit the intersection.

14. The apparatus according to any one of claims 11 to 13, wherein
the lane selection unit is configured to select, based on the collision risk, an included angle between an orientation of the vehicle and an orientation of each lane of the plurality of lanes, and an included angle between an orientation of the first obstacle and the orientation of each lane, the first lane from the plurality of lanes to exit the intersection.

15. The apparatus according to any one of claims 11 to 14, wherein
the determining unit is further configured to: before the vehicle passes through the intersection, determine the first obstacle from a plurality of obstacles based on a TTC between the vehicle and each obstacle of the plurality of obstacles, and/or a distance between the vehicle and each obstacle; or
when the vehicle passes through the intersection, determine the first obstacle from a plurality of obstacles based on at least one of a TTC between the vehicle and each obstacle of the plurality of obstacles, a distance between the vehicle and each obstacle, and a predicted trajectory of each obstacle.

16. The apparatus according to any one of claims 11 to 15, wherein the apparatus further comprises:
a control unit, configured to control a prompt apparatus to prompt information about the first lane.

17. The apparatus according to any one of claims 11 to 16, wherein
the determining unit is further configured to determine an obstacle avoidance trajectory of the vehicle in the first lane based on the collision risk.

18. The apparatus according to any one of claims 11 to 17, wherein the information about the first obstacle comprises one or more of a location, a speed, an acceleration, a speed direction, a heading direction, or a yaw rate of the first obstacle.

19. The apparatus according to any one of claims 11 to 18, wherein the road topology information comprises at least one of lane division information of a road on which the vehicle is located, a type of each lane, and lane line information of each lane.

20. The apparatus according to any one of claims 11 to 19, wherein the apparatus further comprises:
a route planning unit, configured to plan a traveling trajectory of the vehicle from a current location to the first lane.

21. A lane selection apparatus, comprising:
a memory, configured to store a computer program; and
a processor, configured to execute the computer program stored in the memory, to enable the apparatus to perform the method according to any one of claims 1 to 10.

22. A lane selection system, comprising a sensor and a computing platform, wherein the computing platform comprises the apparatus according to any one of claims 11 to 21.

23. A vehicle, comprising the apparatus according to any one of claims 11 to 21, or the system according to claim 22.

24. A computer-readable storage medium, wherein the computer-readable storage medium stores a computer program, and when the computer program is executed by a computer, the method according to any one of claims 1 to 10 is performed.

25. A chip, comprising a circuit configured to perform the method according to any one of claims 1 to 10.
